(19) Europäisches Patentamt
European Patent Office
Office européen des brevets

(11) EP 1 879 956 B1

(12) EUROPÄISCHE PATENTSCHRIFT

(45) Veröffentlichungstag und Bekanntmachung des Hinweises auf die Patenterteilung:
06.03.2013 Patentblatt 2013/10

(21) Anmeldenummer: 06742810.2

(22) Anmeldetag: 04.05.2006

(51) Int Cl.:
C08K 5/544 (2006.01)        C08K 5/5425 (2006.01)
C08K 5/54 (2006.01)         C08L 83/04 (2006.01)
C08J 3/03 (2006.01)

(86) Internationale Anmeldenummer:
PCT/EP2006/004201

(87) Internationale Veröffentlichungsnummer:
WO 2006/119916 (16.11.2006 Gazette 2006/46)

(54) **VERFAHREN ZUR HERSTELLUNG VON DISPERSIONEN VON VERNETZTEN ORGANOPOLYSILOXANEN**

METHOD FOR PRODUCING CROSSLINKABLE ORGANOPOLYSILOXANE DISPERSIONS

PROCEDE POUR PRODUIRE DES DISPERSIONS D'ORGANOPOLYSILOXANES RETICULES

(84) Benannte Vertragsstaaten:
BE DE FR GB NL

(30) Priorität: 12.05.2005 DE 102005022099

(43) Veröffentlichungstag der Anmeldung:
23.01.2008 Patentblatt 2008/04

(73) Patentinhaber: Wacker Chemie AG
81737 München (DE)

(72) Erfinder: SCHNEIDER, Otto
84489 Burghausen (DE)

(74) Vertreter: Deffner-Lehner, Maria et al
Wacker Chemie AG
Zentralbereich Patente, Marken und Lizenzen
Hanns-Seidel-Platz 4
81737 München (DE)

(56) Entgegenhaltungen:
US-A- 5 004 771    US-A- 5 994 459

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Herstellung von Dispersionen von vernetzten Organopolysiloxanen. Weiterhin betrifft die Erfindung Dispersionen von vernetzten Organopolysiloxanen. Weiterhin betrifft die Erfindung daraus hergestellte Formkörper.

Zur Herstellung von Polysiloxanen mit hoher Viskosität existiert eine Reihe von Methoden. Aus US 5,942,574 ist die Herstellung von Emulsionen aus hochviskosen Ausgangsstoffen bis 10 000 000 mPa·s bekannt. Dazu werden jedoch speziell konstruierte, schwere Extruder benötigt. Die entstehenden Emulsionen sind sehr grobteilig und wenig stabil. Diese Emulsionen enthalten hochviskose, jedoch nicht vernetzte Silicone.

Emulsionen von vernetzten Siliconen sind ebenfalls bekannt. Für die Vernetzung der Silicone werden (Schwer)Metall-haltige oder Metall-freie Katalysatoren sowie Vernetzer benötigt. Teilweise werden zur Steuerung der Reaktivität und Topfzeit auch Inhibitoren verwendet, um ein unerwünschtes zu frühes Vergelen zu verhindern.

Gemäß US 5,001,187 wird OH-endständiges Polydimethylsiloxan in Emulsion unter sauren Bedingungen polymerisiert, und unter Zugabe einer Zinnverbindung und nach Abdampfen von Wasser entsteht innerhalb von 7 Tagen ein Elastomerfilm.

US 2001/0027233 A1 beschreibt eine ähnliche Herstellung des Elastomers aus einem 2-Komponenten-System. In der einen Emulsion ist OH-endständiges Polydimethylsiloxan und der Vernetzer emulgiert. Die zweite Emulsion enthält den Zinn-Katalysator. Nach dem Mischen der beiden Emulsionen reagieren die Komponenten unter Zinn-Katalyse. Es entsteht eine Suspension mit vernetzten Partikeln mit niedrigerer Teilchengröße und einer besseren Verteilbarkeit in Harzen.

US 4,894,412 beschreibt eine selbstvernetzende Aminosiloxan-Emulsion, die in einer mehrere Verfahrensschritte umfassenden 3-tägigen, basenkatalysierten Reaktion bei 70 °C unter Verwendung von sieben Komponenten hergestellt wird. Nach dem Abtrocknen des Wassers wird ein flexibler, gummiartiger Film erhalten.

EP 0 874 017 B1 beansprucht Kettenverlängerungsreaktionen unter Metallkatalyse. Die erhaltenen Silicone sind Öle mit Viskositäten bis 75 000 000 mm$^2$/sec, jedoch keine harten oder elastomeren Filme oder Pulver.

In DE 2912431 A1 ist die Herstellung von Organopolysiloxanlatex ausgehend von cyclischen Siloxanen beschrieben, die mit stark sauren Emulgatoren als Katalysator, wie z.B. Dodecylbenzolsufonsäure, in Gegenwart eines funktionellen Trialkoxysilans, das die funktionelle Gruppe in $\gamma$-Stellung aufweist, geöffnet und polymerisiert werden. Die Emulsion wird dazu mindestens 2 Stunden auf 80°C erhitzt, muss danach bei niedrigerer Temperatur nachreifen und wird anschließend neutralisiert.

WO 2004/069899 beschreibt die Herstellung von wässrigen Siliconöl-Emulsionen, die geringe Mengen an Octamethylcyclotetrasiloxan (D4) enthalten und daher im Kosmetikbereich Verwendung finden, durch Umsetzung von Emulsionen von Silanolfunktionellen Polysiloxanen mit $\gamma$-Aminosilanen ,wie 3-Aminopropyltrimethoxysilan oder 3-(2-aminoethylamino)propyl-trimethoxysilan, in Gegenwart von NaOH als Katalysator. Die Reaktionszeit beträgt 6 bis 8 Stunden bei Raumtemperatur, wobei sich die Viskosität des Siliconpolymers von 4000 auf 6.500 mPas erhöht. Trotz des Einsatzes von trifunktionellem Silan wird kein vernetztes Elastomer erhalten.

Wasserbasierende RTV-1-Mischungen werden ebenfalls mit Metall-haltigen Katalysatoren versetzt, um eine hohe Reaktivität, schnelle Filmbildung, usw. zu erhalten, wie dies z.B. in US 5,861,459 beschrieben ist. Um weitere gewünschten Eigenschaften des Elastomerfilms zu erhalten, wie z.B. Haftung, sind eine Vielzahl von Zusatzstoffen wie aminofunktionelles Organopolysiloxane oder spezielle Siliconharze erforderlich, die selbst wiederum aufwändig hergestellt werden müssen.

Metall-freie wässrige RTV-1-Dispersionen bestehen - wie in EP 828 794 B1 ausgeführt - zumindest aus den 3 Komponenten:

1. kondensationsfähige Gruppen aufweisende Organopolysiloxane,
2. als Vernetzer fungierende (aminfreie) Organosiliciumverbindungen mit mindestens 3 vernetzungsreaktiven Gruppen,
3. basische, N-haltige Organosiliciumverbindung, ferner Emulgatör(en) und Wasser zum Bilden der Dispersion.

EP 655 475 B1 benennt als Vernetzermoleküle spezielle Siliconharze.

Diese Übersicht zeigt, dass die Zusammensetzung bzw. Herstellung von Silicon-Emulsionen, die beim Eintrocknen ein hartes oder elastomeres Silicon-Netzwerk ausbilden, unbefriedigend ist. Die Emulsionen vernetzbarer Silicone sind in Rezeptur und Herstellverfahren komplex aufgebaut und bestehen typischerweise aus einer Vielzahl von benötigten Komponenten. Durch die variierenden Eigenschaften der einzelnen Komponenten sowie durch die gegenseitigen Einflüsse in der herzustellenden Emulsion, ist eine konstante Qualität des vernetzten Silicons in der Emulsion schwierig zu erreichen. Ferner sind Katalysatoren, insbesondere Metall-haltige Katalysatoren, sowie Lösemittel aufgrund ihrer toxikologischen, ökologisch oder sonstigen ungünstigen Eigenschaften, wie Beeinträchtigung der Lagerstabilität der Emulsion, unerwünscht.

In DE-A 2500020 ist ein Verfahren zur Herstellung von Aminosiloxanen beschrieben, bei dem silanolterminierte Polysiloxane mit α-Aminomonoalkoxysilanen umgesetzt werden. Die Reaktion läuft bei moderaten Temperaturen unter Abspaltung von Alkohol ab, wobei Polysiloxanöle mit endständigen Aminogruppen entstehen. In DE-A 1244181 ist ebenfalls ein Verfahren zur Herstellung von endständig aminomethylsubstituierten Organopolysiloxanen beschrieben, bei dem Brommethylsubstituiertes Monoalkoxysilan mit sekundären Aminen umgesetzt wird, wobei als Zwischenprodukt ein α-Aminomonoalkoxysilan entsteht, das zusammen mit Alkyldihalogen- oder Alkyldialkoxysilan zum endständig aminomethyl-substituierten Organopolysiloxan hydrolysiert wird. Nach diesen beiden Verfahren werden keine vernetzten Organopolysiloxane erhalten.

In US 5,004,771 sind wässrige Dispersionen beschrieben, wobei Dihydroxypolydiorganopolysiloxane mit Organosiliconaten als alkalische Vernetzer umgesetzt werden.

Aus US 5,994,459 sind Emulsionen von Polysiloxanen bekannt, die erhalten werden aus Siloxanpolymeren und selbstkatalysierenden Vernetzern, welche tri- oder tetrafunktionelle Silane mit Carboxy-, Hydroxylamin-, Oxim-, Amin- oder Acetoamidogruppen sind können, zusammen mit weiteren Vernetzern, wie Methyltrimethoxysilan oder Vinyltrimethoxysilan.

In WO 2006/015740 A1 ist ein Verfahren beschrieben, bei dem hochviskose Organopolysiloxane erhalten werden durch Umsetzung von Hydroxypolysiloxanen mit reaktiven Alkoxysilanen, wobei aber die erhaltenen Organopolysiloxane in Toluol löslich sind und daher unvernetzt sind.

Es bestand daher die Aufgabe, Dispersionen vernetzter harter oder elastomerer Organopolysiloxane sowie ein einfaches und sicher durchzuführendes Verfahren zur Herstellung dieser Dispersionen bereitzustellen, bei dem die vorstehend genannten Nachteile vermieden werden. Ferner sollten diese Dispersionen beim Verdampfen des Wassers harte oder elastomere Filme oder Pulver bilden, die gute Haftung auf unterschiedlichen Substraten aufweisen.

Ferner sollte das Verfahren keinen separat durchzuführenden chemischen Reaktionsschritt enthalten, insbesondere keine unter Erwärmung ablaufende Reaktion, und nur von wenigen Ausgangsstoffen ausgehen.

Weiterhin bestand die Aufgabe, Dispersionen von vernetzen Organopolysiloxanen bereitzustellen, die feinteilig, stabil und bevorzugt pH-neutral (Bereich pH ca. 5 - 8) sind.

Weiterhin bestand die Aufgabe, Dispersionen von vernetzen Organopolysiloxanen bereitzustellen, die frei oder nahezu frei von flüchtigen organischen Verbindungen (VOC) sind.

Die Aufgabe wird durch die Erfindung gelöst.

Gegenstand der Erfindung ist ein Verfahren zur Herstellung von Dispersionen von vernetzten Organopolysiloxanen, indem mindestens ein Si-gebundene Alkoxy- oder Hydroxygruppen aufweisendes Organopolysiloxan (1) mit einem hochreaktiven Trialkoxysilan (2) der allgemeinen Formel

$$(AKT)_a Si(OR^3)_{4-a} \qquad (II)$$

oder dessen Teilhydrolysate, wobei

AKT     einen einwertigen, die Reaktivität der Si-$(OR^3)$-Bindung steigernden Rest der Formel $-CR^4_2-Y$ bedeutet,
$R^3$      einen Alkylrest mit 1 bis 8 Kohlenstoffatomen je Rest,
$R^4$      ein Wasserstoffatom oder einen Alkylrest mit 1 bis 4 Kohlenstoffatomen, bevorzugt ein Wasserstoffatom bedeutet,
Y       einen monofunktionellen Rest aus der Gruppe der Halogene, der monosubstituierten Atome O und S und der substituierten Atome N und P bedeutet,
a       1 ist,

mit der Maßgabe, dass die Ausgangsviskosität der Mischung aus (1) und (2) innerhalb von 2 Stunden Reaktionszeit bei Raumtemperatur (21°C) mindestens verdoppelt wird,
in Gegenwart von Dispersionsmittel (3), vorzugsweise Wasser, und Emulgator (4)
und gegebenenfalls weiteren Stoffen (5), die an der Umsetzung nicht direkt teilnehmen,
umgesetzt wird,
mit der Maßgabe, dass keine Metall-haltigen Katalysatoren mitverwendet werden, und
dass die Organopolysiloxane in den erhaltenen Dispersionen vernetzt sind und in Toluol unlöslich sind, jedoch eventuell darin quellen, was aber ebenfalls als unlöslich zu verstehen ist.

Bei dem erfindungsgemäßen Verfahren werden als Organopolysiloxane (1) vorzugsweise solche aus Einheiten der allgemeinen Formel

$$R_c(OR^1)_d SiO_{\frac{4-(c+d)}{2}} \qquad (I)$$

wobei

R    ein Wasserstoffatom oder einen einwertigen, gegebenenfalls mit den Elementen N, P, S, O, Si und Halogen substituierten, gesättigten oder ungesättigten Kohlenwasserstoffrest mit 1 bis 200 Kohlenstoffatomen, vorzugsweise 1 bis 36 Kohlenstoffatomen, je Rest bedeutet,

$R^1$    ein Wasserstoffatom oder einen Alkylrest mit 1 bis 8 Kohlenstoffatomen, bevorzugt ein Wasserstoffatom oder einen Methyl- oder Ethylrest bedeutet,

c    0, 1, 2 oder 3 und

d    0, 1 oder 2 ist,

mit der Maßgabe, dass die Summe c+d $\leq$ 3 ist und im Organopolysiloxan (1) durchschnittlich mindestens ein Rest $OR^1$ je Molekül, bevorzugt in der Bedeutung von $R^1$ gleich Wasserstoffatom, enthalten ist, eingesetzt wird.

Gegenstand der Erfindung sind weiterhin Dispersionen, vorzugsweise Emulsionen, von vernetzten Organopolysiloxanen enthaltend vernetzte Organopolysiloxane aus Einheiten der allgemeinen Formel

$$AKT_n R_c (OR^1)_d SiO_{\frac{4-(n+c+d)}{2}} \qquad (III)$$

wobei AKT, R, $R^1$, c und d die oben dafür angegebene Bedeutung haben, und

n 0 oder 1 ist,

mit der Maßgabe, dass die Summe n+c+d $\leq$ 3 ist und dass durchschnittlich je Molekül mindestens ein Rest AKT enthalten ist, Dispersionsmittel (3), vorzugsweise Wasser, und

Emulgatoren (4), und gegebenenfalls weitere Stoffe (5), die an der Umsetzung nicht direkt teilnehmen, mit der Maßgabe, dass keine Metallkatalysatoren enthalten sind und dass die Organopolysiloxane in den Dispersionen vernetzt sind und in Toluol unlöslich sind, jedoch eventuell darin quellen, was aber ebenfalls als unlöslich zu verstehen ist.

Die erfindungsgemäßen vernetzten Organopolysiloxane weisen hochmolekulare verzweigte oder dendrimerartige hochverzweigte Strukturen auf, wobei durch diese Vernetzung harte oder elastomere Verbindungen entstehen, somit eine Viskositätsmessung nicht möglich ist und die typischerweise in organischen Lösemitteln, wie Toluol, unlöslich sind, jedoch eventuell darin quellen, was aber ebenfalls im Rahmen dieser Erfindung als unlöslich zu verstehen ist.

Dies steht im Gegensatz zu unvernetzten Organopolysiloxanen, die auch hochviskos sein können, bei denen aber eine Viskositätsmessung möglich ist und die in organischen Lösemitteln, wie Toluol, löslich sind.

Dass nach dem erfindungsgemäßen Verfahren wässrige Dispersionen von vernetzten Organopolysiloxanen erhalten werden können, war überraschend, da in A. Adima et.al., Eur. J. Org. Chem. 2004, 2582-2588 beschrieben ist, dass sich $\alpha$-Aminomethyltrialkoxysilane in Gegenwart von Wasser zu $SiO_2$ und dem entsprechenden methylierten Amin zersetzen.

Die erfindungsgemäßen vernetzten Organopolysiloxane können verzweigte, dendrimerartige hochverzweigte oder vernetzte Strukturen aufweisen. Diese vernetzten Organopolysiloxane können aus der Dispersion als harte oder elastomere Formkörper, wie Filme, isoliert werden.

Vorzugsweise sind die erfindungsgemäßen Dispersionen wässrige Suspensionen oder wässrige Emulsionen von vernetzten Organopolysiloxanen.

Die erfindungsgemäßen Dispersion von vernetzten Organopolysiloxanen bilden beim Eintrocknen - ohne Katalysatorzugabe oder Veränderung des pH-Wertes - ein hartes oder elastisches Siliconnetzwerk aus. Bei der Herstellung der erfindungsgemäßen vernetzten Organopolysiloxane werden vorzugsweise nur OH-endständige Polyorganosiloxane und schnell reagierende Vernetzer benötigt, und diese Komponenten reagieren vorzugsweise bei Raumtemperatur miteinander. Zur Unterstützung dieser Reaktion werden keine Metall-haltigen zusätzlichen Katalysatoren benötigt. Die Reaktion verläuft ferner vorzugsweise im neutralen Bereich, d.h. im pH-Bereich von ca. 5 bis 8, der sich durch die Komponenten selbst ergibt. Durch die hohe Reaktivität ist ferner eine gezielt geführte chemische Umsetzung nicht nötig und vorzugsweise auch kein Erwärmung. Optional können diese Dispersionen weitere Zusätze (5) enthalten wie z.B. wassermischbare oder nicht wassermischbare Flüssigkeiten, silicon- oder nicht siliconhaltige Emulsionen, weitere Silane oder Silicone z.B. als Haftvermittler, sowie wasserlösliche oder wasserunlösliche Feststoffe, insbesondere wasserunlösliche Feststoffe, die als verstärkende oder nicht verstärkende Füllstoffe dienen.

Die erfindungsgemäße Dispersion zeichnet sich durch ihre hohe Lagerstabilität, auch bei erhöhter Temperatur, und durch ihre hohe Scherstabilität aus. Das erfindungsgemäße Verfahren hat den Vorteil, dass Dispersionen niedriger Viskosität bei gleichzeitig hohem Festgehalt und Füllstoffgehalt erhalten werden können. Der Gehalt an nichtflüchtigen Stoffen in der Dispersion beträgt etwa 1 bis 99 Gew-%, bezogen auf das Gesamtgewicht der Dispersion.

Bei dem erfindungsgemäßen Verfahren werden keine Metall-haltigen Katalysatoren verwendet, d.h. es werden vorzugsweise keine Übergangsmetalle der VIII. Nebengruppe des Periodensystems und deren Verbindungen und keine Metalle der III., IV. und V. Hauptgruppe des Periodensystems und deren Verbindungen verwendet, wobei die Elemente C, Si, N, und P in dieser Definition nicht als Metalle gelten.

Beispiele für Kohlenwasserstoffreste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neoPentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der $\alpha$- und der $\beta$-Phenylethylrest.

Bevorzugt sind als Rest R das Wasserstoffatom oder der Methyl-, Ethyl-, Octyl- und Phenylrest, besonders bevorzugt sind das Wasserstoffatom oder der Methyl-und Ethylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest. Beispiele für Rest $R^1$ sind die vorstehend bei R aufgeführten Alkylreste sowie der Methoxyethyl- und der Ethoxyethylrest, wobei es sich bei dem Rest $R^1$ bevorzugt um Wasserstoff und um Alkylreste mit 1 bis 18 Kohlenstoffatomen, die durch Sauerstoffatome unterbrochen sein können, besonders bevorzugt um Wasserstoff und den Methyl- und den Ethylrest handelt.

Beispiele für Reste R gelten in vollem Umfang für Reste $R^2$.

Bevorzugte Beispiele für Reste $R^3$ sind der Methyl- und Ethylrest.

Bevorzugt werden als Organopolysiloxane (1) Siloxane der allgemeinen Formel

$$(R^1O)R_2SiO(SiR_2O)_eSiR_2(OR^1) \qquad (IV)$$

wobei R und $R^1$ die oben dafür angegebene Bedeutung haben und e eine ganze Zahl von 1 bis 1000 ist,
mit der Maßgabe, dass 25 bis 100 %, vorzugsweise 50 bis 100 % aller Reste $R^1$ Wasserstoffatome sind,
sowie solche Siloxane (Harze) der allgemeinen Formel

$$[(R_3SiO_{1/2})_f (R_2SiO_{2/2})_g (R_1SiO_{3/2})_h(SiO_{4/2})_k] \qquad (V)$$

wobei R die oben dafür angegebene Bedeutung haben und zusätzlich R in Formel (V) auch gleich $(OR^1)$ sein kann mit der oben dafür angegebenen Bedeutung, mit der Maßgabe, dass mindestens ein Rest $-OR^1$, wobei $R^1$ ein Wasserstoffatom bedeutet, je Molekül enthalten ist,
f, g, h und k eine ganze Zahl von 0 bis 1000 und $h/(f+g+h+k)$ bevorzugt > 0,2 ist,
eingesetzt.

Besonders bevorzugt werden Siloxane der Formel (IV) eingesetzt.

Beispiele für Siloxane (1) sind handelsübliche Polydimethylsiloxane mit endständigen Silanolgruppen und Polydimethylsiloxane mit endständigen Alkoxygruppen.

Weitere Beispiele für Siloxane (1) sind handelsübliche funktionalisierte Siloxane, wie Aminöle, z.B. Aminöle mit 3-(2-Aminoethyl)aminopropylfunktionen, Glykolöle, Phenyl- oder Phenylmethylöle, die Silanol- oder Alkoxygruppen enthalten.

Weitere Beispiele für Siloxane (1) sind harzartige Siloxane, z.B. Methylsiliconharze, mit 80 Mol% $CH_3SiO_{3/2}$ und 20 Mol% $(CH_3)_2SiO_{2/2}$, und einer Molmasse von ca. 5000g/Mol oder 98 Mol% $CH_3SiO_{3/2}$ und 2 Mol% $(CH_3)_2SiO_{2/2}$ und einer Molmasse von ca. 5000g/Mol, oder z.B. Methylphenylsiliconharze mit 65 Mol% $C_6H_5SiO_{3/2}$ und 35 Mol% $(CH_3)_2SiO_{2/2}$, deren restliche freie Valenzen $R^1O$-Gruppen der o.g. Bedeutung tragen.

Diese Verbindungen werden in großen Mengen kommerziell erzeugt und sind sehr kostengünstig zugänglich, wodurch das erfindungsgemäße Verfahren wirtschaftlich besonders attraktiv ist.

Es kann bei dem erfindungsgemäßen Verfahren eine Art von Organopolysiloxan (1) oder verschiedene Arten von Organopolysiloxan (1) eingesetzt werden.

Die bei dem erfindungsgemäßen Verfahren eingesetzten Organopolysiloxane (1) weisen vorzugsweise Viskositäten von 1 mPa.s bis 50.000.000 mPa.s bei 25°C, bevorzugt 50 mPa.s bis 10.000.000 mPa.s bei 25°C und besonders bevorzugt 100 mPa.s bis 500.000 mPa.s bei 25°C auf

Es kann bei dem erfindungsgemäßen Verfahren eine Art von Silan(2) oder verschiedene Arten von Silan (2) eingesetzt werden.

Beispiele für Reste Y sind
der Fluor-, Chlor-, Brom- oder Jodsubstituent,
die Gruppen -OH oder $-OR^5$

die Gruppen -SH oder -SR$^5$,
die Gruppen -NH$_2$, -NHR$^5$, -NR$^5{}_2$ oder -NR$^6$ und
die Gruppen -PR$^5{}_2$, -P(OR$^5$)$_2$, und -PO(OR$^5$)$_2$ und
die Gruppen -C(O)R$^5$

wobei R$^5$ einen einwertigen organischen, gegebenenfalls N- und/oder O-Atome enthaltenden Rest, vorzugsweise einen einwertigen, gegebenenfalls N- und/oder O-Atome enthaltenden Kohlenwasserstoffrest mit 1 bis 18 Kohlenstoffatomen und R$^6$ einen zweiwertigen gegebenenfalls N- und/oder O-Atome enthaltenden Kohlenwasserstoffrest mit 3 bis 12 Kohlenstoffatomen bedeuten.

Beispiele für Reste AKT sind der Hydroxymethyl-, Methoxymethyl-, Ethoxymethyl-, 2-Ethoxyethoxymethyl-, 2-Butoxyethoxymethyl-, Acetoxymethyl-, Mercaptomethyl-, Ethylthiomethyl-, Dodecylthiomethyl-, Aminomethyl-, Methylaminomethyl-, Dimethylaminomethyl-, Diethylaminomethyl-, Dibutylaminomethyl-, Cyclohexylaminomethyl-, Morpholinomethyl-, Piperidinomethyl-, Piperazinomethyl-, ((Diethoxymethylsilyl)methyl)cyclohexylaminomethyl-, ((Triethoxysilyl) methyl)cyclohexylaminomethyl-, Anilinomethyl-, 3-Dimethylaminopropyl-aminomethyl-, Bis(3-dimethylaminopropyl)aminomethyl-, Diethylphosphinomethyl- und Dibutylphosphinomethylrest, und Gruppen der Formeln -CH$_2$NHCOR$^5$, -CH$_2$NHCO$_2$R$^5$ oder -CH$_2$NHCONHR$^5$, wobei R$^5$ die oben dafür angegebene Bedeutung hat, und der Ethenyl-, Propenyl-, Isopropenyl-, Butenyl-, Butadienyl-, Pentenyl-, Hexenyl-, und Hexadienylrest.

Vorzugsweise ist AKT ein Rest der Formel -CH$_2$NHR$^5$, -CH$_2$NR$^5{}_2$ oder -CH$_2$R$^6$N wobei R$^5$ und R$^6$ die oben dafür angegebene Bedeutung haben.

Beispiele für Kohlenwasserstoffreste R, wie Alkyl-, Cycloalkyl-, Aryl-, Alkaryl- und Aralkylreste R, gelten im vollen Umfang für Kohlenwasserstoffreste R$^5$.

Ein bevorzugtes Beispiel für R$^6$ ist der Rest der Formel -CH$_2$-CH$_2$-O-CH$_2$-CH$_2$-.

Beispiele für Silane (2) sind 2-Butoxyethoxymethyltrimethoxysilan, Dibutylaminomethyltriethoxysilan, Dibutyl-aminomethyltributoxysilan, Cyclohexylaminomethyltrimethoxysilan, Cyclohexylaminomethyltriethoxysilan, Anilinome-thyltriethoxysilan, Morpholinomethyltriethoxysilan, Morpholinomethyltrimethoxysilan, Morpholinomethyltriisopropoxy-silan, 3-Dimethylaminopropyl-aminomethyltrimethoxysilan, Ethylcarbamoylmethyltrimethoxysilan, (Isocyanatomethyl) triethoxysilan, (Isocyanatomethyl)trimethoxysilan (Methacryloxymethyl)triethoxysilan, (Methacryloxymethyl)trimethoxy-silan, Chlormethyltriethoxysilan, Chlormethyltrimethoxysilan, Morpholinomethyltributoxysilan, Morpholinomethyltrialk-oxysilan, wobei der Alkoxyrest ein C$_1$-C$_4$-Alkoxyrest ist, insbesondere ein Gemisch aus Methoxy- und Ethoxyrest ist, Bis-(dimethylaminopropyl)aminomethyl-triethoxysilan, Diisopropylaminomethyltriethoxysilan, Diethylphosphonatomethyltrimethoxysilan, Piperazinomethyltriethoxysilan, Piperidinomethyltriethoxysilan Bis-(diethoxymethylsilylmethyl)cyclohexylamin, Bis-(triethoxysilylmethyl)cyclohexylamin, Mercaptomethyltriethoxysilan, Morpholinomethyltri(2-hydroxyethoxy)silan

Bei dem erfindungsgemäßen Verfahren werden Silane (2) vorzugsweise in Mengen von 0,001 bis 10 Gew.-% bevorzugt 0,01 bis 5,0 Gew.-%, besonders bevorzugt 0,1 bis 3,0 Gew.% jeweils bezogen auf Siloxan (1) eingesetzt.

Die vernetzten Organopolysiloxane können je nach Einsatz von Trialkoxysilan (2) oder Alkoxy- und Hydroxygruppen tragendem Teilhydrolysat von (2) und linearem, verzweigtem oder harzartigem Siloxan (1) verzweigte oder sogar hochverzweigte/stark vernetzte Strukturen mit linearen Anteilen haben.

Werden Dialkoxysilane (2) mit rein linear aufgebauten Siloxanen (1), die maximal 2 SiOH-Funktionen pro Molekül enthalten, insbesondere mit den Siloxanen der Formeln (IV), umgesetzt, werden lineare hochviskose Organopolysiloxane, und keine erfindungsgemäßen vernetzten Organopolysiloxane erhalten.

Werden als Silane (2) Trialkoxysilane eingesetzt werden erfindungsgemäße vernetzte Organopolysiloxane erhalten.

Der Vernetzungsgrad hängt dabei vom eingesetzten Verhältnis der Äquivalente -OR$^3$ in Silan (2) zu -OR$^1$ in Siloxan (1) ab.

Zur Herstellung der erfindungsgemäßen Dispersionen, die vernetzte Organopolysiloxane enthalten, aus Siloxan (1) und hochreaktivem Silan (2) wird Silan (2) oder dessen Teilhydrolysate dabei vorzugsweise in Mengen von mindestens 0,6 Äquivalente -OR$^3$, bevorzugt mindestens 0,7 Äquivalente -OR$^3$, besonders bevorzugt 0,6 bis 5 Äquivalente -OR$^3$, insbesondere 0,65 bis 2 Äquivalente -OR$^3$, insbesondere bevorzugt 0,7 bis 1,5 Äquivalente -OR$^3$, je Äquivalent -OR$^1$ in Siloxan (1) eingesetzt, wobei R$^1$ bevorzugt ein Wasserstoffatom ist.

Der Vernetzungshäufigkeit hängt sowohl von den Kettenlängen der Siloxane (1), als auch von der Stöchiometrie der miteinander reagierenden SiOR$^1$-Gruppen des Siloxans (1) und der SiOR$^3$-Gruppen des Silans (2) ab. Hohe Vernetzungsgrade werden erreicht, wenn gleich viele der SiOR$^2$- und SiOR$^3$-Gruppen miteinander reagieren. Verluste durch Flüchtigkeit oder Nebenreaktionen können hierzu ein stöchiometrisches Verhältnis abweichend von 1,0 : 1,0 erfordern. Falls gewünscht, kann ein stöchiometrischer Überschuss von SiOR$^3$- zu SiOR$^1$-Gruppen eingesetzt werden. Überra-schenderweise wurde festgestellt, dass auch bei einem stöchiometrischen Unterschuss von SiOR$^3$- zu SiOR$^1$-Gruppen, z.B. 0,7:1,0 , elastische oder harte Filme erzielbar sind.

Die hochreaktiven Silane (2) sind dann geeignet und erfindungsgemäß, wenn z.B. ein $\alpha$-,$\omega$-Dihydroxypolydi-methyl-siloxan mit einer Viskosität von 6350 mPas, gemessen bei 25°C, als Vertreter für Siloxan (1) mit Silan (2) im

Verhältnis der Äquivalente $-OR^3$ zu $-OR^1$ gleich 1 bis 1,5 gemischt wird, und diese Mischung beim Stehenlassen bei Raumtemperatur (21°C) die Viskosität innerhalb von 2 Stunden mindestens verdoppelt, d.h. der Visko-Faktor $\geq 2$ ist, siehe Tabelle 1.

Tabelle 1: Eine Auswahl erfindungsgemäßer und nichterfindungsgemäßer Silane (2)

| Silan (2) | Verhältnis -OR$^3$ /-OR$^1$ | Visko-Faktor[1] | erfindungs -gemäß |
|---|---|---|---|
| Cyclohexylaminomethyltriethoxysilan | 1 | > 330* | ja |
| Morpholinomethyltriethoxysilan | 1 | 122 | ja |
| Dibutylaminomethyl-trimethoxysilan | 1 | > 330* | ja |
| Piperazinomethyl-triethoxysilan | 1 | > 330* | ja |
| Bis-(dimethylaminopropyl)-aminomethyl-triethoxysilan | 1 | 45 | ja |
| Bis(diethoxymethylsilylmethyl) -cyclohexylamin | 1 | > 330* | ja |
| Bis(triethoxysilylmethyl)-cyclohexylamin | 1 | > 330* | ja |
| Vinyltriacetoxysilan | 1 | 23,6 | nein |
| 3-Aminopropyltrimethoxysilan | 1 | 1,21 | nein |
| N-(2-Aminoethyl)(3-aminopropyl)trimethoxysilan | 1 | 1,15 | nein |
| Methyltrimethoxysilan | 1 | 1,1 | nein |
| (Methacryloxymethyl)triethoxysilan | 1 | 1,02 | nein |

Messung der Viskosität bei 21°C mit Brookfield DV-II+ Viscometer

**Visko-Faktor**

[1] = **(Viskosität Mischung (1) und (2) nach 2h bei 21°C) / (Viskosität des eingesetzten Siloxan (1) )**     .

* Bereits nach < 30 Minuten sind die Mischungen sehr hochviskos und außerhalb des Messbereichs des Brookfield Viskositätsmessgeräts.

Die Herstellung der erfindungsgemäßen Dispersionen vernetzter Organopolysiloxane erfolgt durch intensives Mischen von Siloxanen aus der Gruppe der Siloxane (1) mit Silanen (2) Dispersionsmitteln (3), vorzugsweise Wasser, und Emulgatoren (4) und gegebenenfalls weiterer Stoffen (5) miteinander. Die Herstellung kann diskontinuierlich oder kontinuierlich erfolgen.

Technologien zur Herstellung von Dispersionen oder Emulsionen von Organopolysiloxanen sind bekannt. So kann das intensive Mischen und Dispergieren in Rotor-Stator-Rührvorrichtungen, Kolloidmühlen, Hochdruckhomogenisatoren, Mikrokanälen, Membranen, Strahldüsen und ähnlichem, oder mittels Ultraschall erfolgen. Homogenisiergeräte und Verfahren sind z.B. in Ullmann's Encyclopedia of Industrial Chemistry, CD-ROM-Ausgabe 2003, Wiley-VCH Verlag, unter dem Stichwort "Emulsions" beschrieben.

Obwohl die Silane (2) bekanntermaßen hydrolyseempfindliche Gruppen enthalten, besonders wenn $R^3$ ein Methyl-, Ethyl- oder Acylrest ist, werden selbst in Gegenwart von Wasser überraschenderweise vernetzte Organopolysiloxane durch Reaktion mit mehrerer Siloxanen (1) erhalten.

Die Art der Mischung der Komponenten, die zur Herstellung der erfindungsgemäßen Dispersionen gebraucht werden, ist nicht sehr kritisch und kann in verschiedener Reihenfolge ausgeübt werden. In Abhängigkeit von den Komponenten (1), (2), (3), (4) und ggf. (5) können sich aber bevorzugte Vorgehensweisen ergeben, die im Einzelfall geprüft werden sollten.

Es können z.B. die Komponenten (1) und (2) miteinander vorgemischt werden, daraufhin der (oder die) Emulgator(en) zugefügt und danach das Dispersionsmittel und ggf. weitere Stoffe (5) eingearbeitet werden. Es ist auch möglich, die Komponenten (1) bis (4) bzw. bis (5) der Reihe nach in die Emulgierapparatur zu dosieren. In besonderen Fällen kann es z.B. aufgrund der Siloxanviskosität oder -reaktivität vorteilhaft sein, Silan (2) mit einem Siloxan (1) zu mischen und danach ein anderes Siloxan (1) einzuarbeiten, oder umgekehrt, je nachdem, wie sich günstigere rheologische Eigenschaften für die Verarbeitung der Komponenten ergeben.

Bei sehr reaktiven Silanen (2) kann es vorteilhaft sein, erst die Komponente (1) mit Emulgator (4) und dem Dispersionsmittel (3) in eine steife Phase überzuführen, und danach das Silan (2) pur oder verdünnt in einem inerten Stoff (5) einzudosieren, bevor eine Phasenumkehr und damit z.B. eine Öl-in-Wasser-Dispersion erhalten wird.

Desweiteren ist es auch möglich, Silan (2) in die fertige Emulsion von Siloxanen (1) zu geben, um so die gewünschte Reaktion und Vernetzung des Siloxan (1) in der Emulsion zu erreichen. Ferner kann das Silan (2) zuvor durch Zugabe von Wasser teilweise oder vollständig hydrolysiert werden. Um VOCfreies Hydrolysat von (2) zu erhalten kann das Nebenprodukt Alkohol $R^3OH$ durch geeignete bekannte Maßnahmen wie Destillation, Membranverfahren oder andere Trennverfahren teilweise oder vollständig entfernt werden.

Bei dem erfindungsgemäßen Verfahren wird Dispersionsmittel (3), bevorzugt Wasser, in Mengen von vorzugsweise 1 bis 99 Gew.-%, besonders bevorzugt 5 bis 95 Gew.-%, jeweils bezogen auf das Gesamtgewicht aller Inhaltsstoffe der Dispersion eingesetzt.

Vorzugsweise kann das Verfahren zur Herstellung von vernetzten Dispersionen kontinuierlich durchgeführt werden. Dabei werden vorzugsweise die zur Herstellung der Dispersion benötigen Organopolysiloxane (1) kontinuierlich hergestellt und kontinuierlich zur Emulgierapparatur weitergeleitet, und vor der Emulgierung kontinuierlich mit Silanen (2), Emulgatoren (4) und zumindest einem Teil des Wassers als Dispergiermittel (3) vermischt, und diese Mischung wird direkt und kontinuierlich einem ersten hochscherenden Mischer zugeführt und in diesem Mischer wird eine viskose Phase gebildet, wobei der Druck und die Temperatur nach diesem Mischer gemessen und so eingeregelt werden, dass eine qualitativ hochwertige und möglichst feinteilige Dispersion entsteht.

Bei dem erfindungsgemäßen Verfahren können als Emulgatoren (4) alle bisher bekannten, ionischen und nicht-ionischen Emulgatoren sowohl einzeln als auch als Mischungen verschiedener Emulgatoren eingesetzt werden, mit denen auch bisher wässrige Dispersionen, insbesondere wässrige Emulsionen von Organopolysiloxanen hergestellt werden konnten. Ebenso können bekanntermaßen anorganische Feststoffe als Emulgatoren (4) eingesetzt werden. Dies sind z.B. Kieselsäuren oder Bentonite wie in EP 1017745 A oder DE 19742759 A beschrieben.

Beispiele für anionische Emulgatoren sind:

1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO)- bzw. Propylenoxid(PO)einheilen.

2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein.

3. Alkali- und Ammoniumsalze von Carbonsäuren mit 8 bis 20 C-Atomen im Alkyl-, Aryl-, Alkaryl- oder Aralkylrest.

4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw.

Alkarylrest und 1 bis 40 EO-Einheiten.

Beispiele für nichtionische Emulgatoren sind:

5. Polyvinylalkohol, der noch 5 bis 50 %, vorzugsweise 8 bis 20 % Vinylacetateinheiten aufweist, mit einem Polymerisationsgrad von 500 bis 3000.

6. Alkylpolyglycolether, vorzugsweise solche mit 3 bis 40 EO-Einheiten und Alkylresten von 8 bis 20 C-Atomen.

7. Alkylarylpolyglycolether, vorzugsweise solche mit 5 bis 40 EO-Einheiten und 8 bis 20 C-Atomen in den Alkyl- und Arylresten.

8. Ethylenoxid/Propylenoxid(EO/PO)-Blockcopolymere, vorzugsweise solche mit 8 bis 40 EO- bzw. PO-Einheiten.

9. Additionsprodukte von Alkylaminen mit Alkylresten von 8 bis 22 C-Atomen mit Ethylenoxid oder Propylenoxid.

10. Fettsäuren mit 6 bis 24 C-Atomen.

11. Alkylpolyglykoside der allgemeinen Formel $R^*$-O-$Z_O$, worin $R^*$ einen linearen oder verzweigten, gesättigten oder ungesättigten Alkylrest mit im Mittel 8 - 24 C-Atomen und $Z_O$ einen Oligoglykosidrest mit im Mittel o = 1 - 10 Hexose- oder Pentoseeinheiten oder Gemischen davon bedeuten.

12. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.

13. Polare Gruppen, enthaltend insbesondere die Elemente O, N, C, S, P, Si, enthaltende lineare Organo(poly) siloxane, insbesondere solche mit Alkoxygruppen mit bis zu 24 C-Atomen und/oder bis zu 40 EO- und/oder PO-Gruppen.

Beispiele für kationische Emulgatoren sind:

14. Salze von primären, sekundären und tertiären Fettaminen mit 8 bis 24 C-Atomen mit Essigsäure, Schwefelsäure, Salzsäure und Phosphorsäuren.

15. Quarternäre Alkyl- und Alkylbenzolammoniumsalze, insbesondere solche, deren Alkylgruppen 6 bis 24 C-Atome besitzen, insbesondere die Halogenide, Sulfate, Phosphate und Acetate.

16. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.

Als Ampholytische Emulgatoren eignen sich besonders:

17. Langkettig substituierte Aminosäuren, wie N-Alkyl-di-(aminoethyl-)glycin oder N-Alkyl-2-aminopropionsäuresalze.

18. Betaine, wie N-(3-Acylamidopropyl)-N,N-dimethylammonium-salze mit einem $C_8$-$C_{18}$-Acylrest und Alkyl-imidazolium-Betaine.

Bevorzugt als Emulgatoren sind nichtionische Emulgatoren, insbesondere die vorstehend unter 6. aufgeführten Alkylpolyglycolether
Der Bestandteil (4) kann aus einem der o.g. Emulgatoren oder aus einem Gemisch zweier oder mehrerer o.g. Emulgatoren bestehen, er kann in reiner Form oder als Lösungen eines oder mehrerer Emulgatoren in Wasser oder organischen Lösungsmitteln eingesetzt werden.
Bei dem erfindungsgemäßen Verfahren werden die Emulgatoren (4) in Mengen von vorzugsweise 0,1 bis 60 Gew.-%, besonders bevorzugt 0,5 bis 30 Gew.-%, jeweils bezogen auf das Gesamtgewicht an Siloxanen (1) und Silane (2), eingesetzt.
Falls das Organopolysiloxan (1) oder das Silan (2) bzw. das entstehende vernetzte Organopolysiloxan selbst als Emulgator wirkt, kann auf den Zusatz von separatem Emulgator (4) verzichtet werden.

**EP 1 879 956 B1**

Beispiele für wassermischbare Flüssigkeiten, die als weitere Stoffe (5) eingesetzt werden können, sind Säuren wie z.B. Ameisensäure, Essigsäure, Propionsäure, Phosphorsäure, Salzsäure, Schwefelsäure oder Basen wie z.B. Triethylamin, Triethanolamin, Trioctylamin, ferner Ethylen- oder Polyethylenglykol, 1,2-Propandiol, 1,3-Propandiol, Polypropylenglykol, Diethylenglykolmonobutylether oder Glycerin. Desweiteren können Dispersionen oder Emulsionen als weitere Stoffe (5) eingesetzt werden, z.B. im Handel erhältliche Dispersionen wie Styrol-Butadien-Latex, Acryl-, Vinyl-, Polyurethan-, oder Polyethylendispersionen sowie Emulsionen natürlicher oder synthetischer Öle, Harze oder Wachse, wie z.B. Carnaubawachs-, Bienenwachs-, Wollwachs-, Aloe Vera-, Vitamin E-, Paraffinöl-, unreaktive Siliconöl-, unreaktive Siliconharz-, Jojobaöl-, Reisöl-, Calendulaöl-, Teebaumöl-, Rosenöl- oder Melissenöl-Emulsionen. Ferner können als weitere Stoffe (5) handelsübliche Konservierungsmittel für Dispersionen wie z.B. Isothiazolinone oder Parabene, bzw. deren wässrigen Formulierungen, zugesetzt werden.

Die Dispersionen können als Dispersionen unverdünnter vernetzter Organopolysiloxane hergestellt werden, jedoch empfiehlt sich manchmal aus Handhabungsgründen eine Verdünnung mit organischen Lösungsmitteln oder niedrig viskosen Oligomeren/Polymeren.

Beispiele für nicht wassermischbare Flüssigkeiten, die als weitere Stoffe (5) eingesetzt werden können, sind daher organische Lösungsmittel, wie Toluol, n-Hexan, n-Heptan und technische Benzinfraktionen und niedrig viskose Oligomere/Polymere, bevorzugt Siloxane, wie Dimethylpolysiloxanen.

Beispiele für wasserlöslich Feststoffe, die als weitere Stoffe (5) eingesetzt werden können, sind z.B. anorganische Salze wie Alkali- oder Erdalkalihalogenide, -sulfate, -phosphate, -hydrogenphosphate, z.B. Natriumchlorid, Kaliumsulfat, Magnesiumbromid, Calciumchlorid, Ammoniumchlorid, Ammoniumcarbonat, oder Salze von $C_1$- bis $C_8$-Carbonsäuren wie Alkali- oder Erdalkalisalze, z.B. Natriumacetat.

Beispiele für wasserunlösliche Feststoffe, die als weitere Stoffe (5) eingesetzt werden können, sind verstärkende und nicht verstärkende Füllstoffe. Beispiele für verstärkende Füllstoffe, also Füllstoffe mit einer BET-Oberfläche von mindestens 50 $m^2$/g, sind pyrogen hergestellte Kieselsäure, gefällte Kieselsäure oder Silicium-Aluminium-Mischoxide mit einer BET-Oberfläche von mehr als 50 $m^2$/g. Die genannten Füllstoffe können hydrophobiert sein. Beispiele für nicht verstärkenden Füllstoffe, also Füllstoffe mit einer BET-Oberfläche von weniger als 50 $m^2$/g, sind Pulver aus Quarz, Kreide, Cristobalit, Diatomeenerde, Calciumsilikat, Zirkoniumsilikat, Montmorillonite, wie Bentonite, Zeolithe einschließlich der Molekularsiebe, wie Natriumaluminiumsilikat, Metalloxide, wie Aluminium- oder Zinkoxid bzw. deren Mischoxide oder Titandioxid, Metallhydroxide, wie Aluminiumhydroxid, Bariumsulfat, Calciumcarbonat, Gips, Siliciumnitrid, Siliciumcarbid, Bornitrid, Glas-, Kohle- und Kunststoffpulver und Glas- und Kunststoffhohlkugeln.

Der Emulgiervorgang zur Herstellung der Dispersion wird vorzugsweise bei Temperaturen unter 120°C, bevorzugt bei 5°C bis 100°C, besonders bevorzugt bei 10°C bis 80°C durchgeführt. Die Temperaturerhöhung kommt vorzugsweise durch den Eintrag mechanischer Scherenergie, die für den Emulgierprozess benötigt wird, zustande. Die Temperaturerhöhung wird nicht zur Beschleunigung eines chemischen Prozesses benötigt. Weiterhin wird das erfindungsgemäße Verfahren vorzugsweise beim Druck der umgebenden Atmosphäre durchgeführt, kann aber auch bei höheren oder niederen Drücken durchgeführt werden.

Das erfindungsgemäße Verfahren hat den Vorteil, dass es ohne Zusatz von Katalysatoren, insbesondere ohne Zusatz von Metallkatalysatoren abläuft. Die Umsetzung von (1) mit (2) läuft vorzugsweise in wenigen Minuten bis mehreren Stunden vollständig ab, wobei auch hier Methoxysilane schneller als Ethoxysilane reagieren. Die Kondensation kann allerdings durch Säuren und Basen beschleunigt werden, was aber nicht bevorzugt ist

Die bei dem erfindungsgemäßen Verfahren als Kondensationsnebenprodukte anfallenden Alkohole oder Carbonsäuren können im Produkt verbleiben oder auch entfernt werden, beispielsweise durch Destillation unter Vakuum, Membranverfahren, oder durch Extraktion.

Die mittels Lichtstreuung in den Dispersionen gemessene mittlere Teilchengröße liegt im Bereich 0,001 bis 100 $\mu$m, bevorzugt bei 0,002 bis 10 $\mu$m. Die pH-Werte können von 1 bis 14 variieren, bevorzugt 3 bis 9, besonders bevorzugt 5 bis 8.

Gegenstand der Erfindung sind weiterhin Formkörper durch Entfernung des Dispersionsmittels (3), vorzugsweise Wasser, von den erfindungsgemäßen Dispersionen, vorzugsweise Emulsionen. Vorzugsweise wird dabei das Wasser durch Trocknen lassen der erfindungsgemäßen Dispersionen bei einer Temperatur von 1 bis 200 °C, bevorzugt 5 bis 150 °C, besonders bevorzugt im Temperaturbereich der umgebenden Atmosphäre, also bei ca. 10 bis 30 °C, entfernt.

Die Trocknungszeit beträgt dabei je nach Dicke des Formkörpers vorzugsweise 0,1 bis 200 Stunden, bevorzugt 0,2 bis 48 Stunden.

Es kann sich bei den Formkörpern um harte oder elastomere Formkörper handeln. Bevorzugt handelt es sich um Beschichtungen oder freistehende Formkörper, wie freistehende Filme. Es können auch harte oder elastomere Pulver erhalten werden, indem das Dispersionsmittel (3), vorzugsweise Wasser, durch Sprühtrocknung, Wirbelbetttrocknung oder Gefriertrocknung von den Dispersionen entfernt wird.

Gegenstand der Erfindung ist weiterhin ein Verfahren zur Herstellung von Beschichtungen, indem die erfindungsgemäße Dispersion auf ein Substrat aufgetragen wird und das Dispersionsmittel (3), vorzugsweise Wasser, entfernt wird. Vorzugsweise wird die Dispersion auf dem Substrat trocknen gelassen.

Im Gegensatz zu Beschichtungen haften freistehende Filme nicht auf dem Substrat, auf dem sie erzeugt wurden, und können von dem Substrat abgezogen werden.

Gegenstand der Erfindung ist weiterhin ein Verfahren zur Imprägnierung oder Infiltration von Substraten, indem die erfindungsgemäße Dispersion auf ein Substrat aufgetragen wird, das Substrat oder deren Oberfläche imprägniert oder infiltriert wird und das Dispersionsmittel (3), vorzugsweise Wasser, entfernt wird.

Vorzugsweise wird die Dispersion auf dem Substrat trocknen gelassen.

Bei den Substraten können die erfindungsgemäßen Dispersionen im wesentlichen auf der Oberfläche verbleiben und das Substrat wird imprägniert, die Dispersionen können aber auch tiefer in das Substrat eindringen und es handelt sich um eine Infiltration.

Das Auftragen von den erfindungsgemäßen Dispersionen auf die zu beschichtenden Substrate bzw. die zu imprägnierenden oder zu infiltrierenden Substrate bzw. deren Oberflächen kann in beliebiger, für die Herstellung von Beschichtungen bzw. Imprägnierungen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder RakelBeschichtung oder mittels einer Luftbürste.

Die Schichtdicke auf den zu beschichtenden Substrate beträgt vorzugsweise 0,01 bis 10.000 $\mu$m, besonders bevorzugt 0,1 bis 100 $\mu$m.

Beispiele für Substrate, die mit den erfindungsgemäßen Dispersionen beschichtet bzw. imprägniert bzw. infiltriert werden können, sind Papier, Holz, Kork, Kunststoffe und Kunststofffolien, wie Polyethylenfolien oder Polypropylenfolien, mit Polyethylen beschichtetes Papier und Pappen, natürliche oder synthetische Fasern, gewebtes und ungewebtes Tuch aus natürlichen oder synthetischen Fasern, Textilien, keramische Gegenstände, Glas, einschließlich Glasfasern, Stein, Beton und Metalle.

Die erfindungsgemäßen Dispersionen können weiterhin als Silicondichtmassen, als PSA (= pressure sensitive adhesives) und in Körperpflegemitteln verwendet werden.

Beispiel 1

In einem Ultra-Turrax T 50 Emulgiergerät (Fa. Janke & Kunkel) wird aus 5 g Isotridecyldecaethoxylat, 85 %ig in Wasser, käuflich erwerblich unter dem Handelsnamen Lutensol TO 109 (Fa. BASF), und 8 g entsalztes Wasser ein Emulgatorgemisch hergestellt, zu dem 100 g eines frisch hergestellten homogenen Siloxan-Polymer/Silangemisches, bestehend aus 99,65 g Polydimethylsiloxandiol mit einem Gehalt an terminalen OH-Gruppen von 1100 Gew.-ppm als Siloxan (1a) und 0,39 g N-Morpholinomethyl-triethoxysilan als Silan (2), dosiert wird. Es wird dann mit insgesamt 90,1 g vollentsalztem Wasser portionsweise verdünnt, worauf man eine michig-weiße Emulsion mit einer durchschnittlichen Teilchengröße von 309 nm erhält. Der Festgehalt der Emulsion beträgt 50,7 %, der pH-Wert 6,0. Die Emulsion ist auch nach 6-monatiger Lagerung bei Raumtemperatur homogen und stabil.

Durch Eindampfen der Emulsion wird nach einer Trockenzeit von 24h/25°C ein gelartig elastischer, auf Glas oder Aluminium gut haftender Film erhalten, der klebende Eigenschaften aufweist.

Beispiele 2 bis 6

Weitere Emulsionen werden analog Beispiel 2 hergestellt, wobei die in Tabelle 2 angegebenen Mengen verwendet werden.

Tabelle 2:

| Beispiel | Siloxan (1) in g | Silan (2) in g | Festgehalt (%) | pH | Teilchengröße (nm) | Filmbeurteilung nach Trocknung 24 h/25°C |
|---|---|---|---|---|---|---|
| B2 | 99, 56 (1a) | 0,44 | 50, 5 | 7 | 478 | sehr elastisch, transparent |
| B3 | 99,40 (1a) | 0,60 | 49,9 | 7 | 481 | elastisch, transparent |
| B4 | 99,22 (1a) | 0,79 | 50,5 | 6,5 | nb* | elastisch, opak, wenig Haftung |
| B5 | 94,0 (1a) | 6,0 | 49,8 | 8 | nb* | wenig elastisch, opak |

(fortgesetzt)

| Beispiel | Siloxan (1) in g | Silan (2) in g | Festgehalt (%) | pH | Teilchengröße (nm) | Filmbeurteilung nach Trocknung 24 h/25°C |
|---|---|---|---|---|---|---|
| B6 | 20,0 (1b) 80, 0 (1a) | 0,37 | 52,0 | 7 | 2810 | sehr elastisch, transparent, klebrig |
| *nb = nicht bestimmt | | | | | | |

Der Festgehalt wird mit bestimmt bei 150 °C bis zur Gewichtskonstanz mit Gerät: Mettler Toledo HR 73.

Die Teilchengrößen werden bestimmt mit Coulter N4 plus.

Als Siloxan (1b) wird verwendet:

Copolymer aus 3-(2-Aminoethylamino)propyl-methylsiloxy- und Dimethylsiloxyeinheiten mit einer Aminzahl von 0,145, einer Viskosität von 4700 mm$^2$/s (bei 25°C) und einem Endgruppenverhältnis von OH/OMe = 54/46.

Als Siloxan (1a) wird verwendet:

Polydimethylsiloxandiol mit einem Gehalt an terminalen OH-Gruppen von 1100 Gew.-ppm.

Als Silan (2) wird verwendet:

N-Morpholinomethyl-triethoxysilan

Die Elastizität der aus der Emulsion hergestellten Filme nimmt mit zunehmender Menge an Silan (2) von B1 nach B5 ab.

Der aus Dispersion B3 hergestellte Elastomerfilm wird auseinandergeschnitten und 24 h in Toluol eingelegt. Die Schnittkanten sind danach immer noch scharf ausgebildet. Der Film ist gequollen, aber in Toluol unlöslich.

Beispiel 7

In einem Ultra-Turrax T 50 Emulgiergerät (Fa. Janke & Kunkel) wird aus 2,5 g Isotridecyldecaethoxylat (Lutensol TO 109, Fa. BASF), und 8 g Wasser ein Emulgatorgemisch hergestellt, zu dem 99 g eines frisch hergestellten homogenen Siloxan-/Silangemisches aus 97,56 g Polydimethylsiloxandiol (1a), 1,0 g Siloxan (1b) und 0,44 g N-Morpholinomethyl-triethoxysilan dosiert wird. Es wird dann mit insgesamt 8,9 g Wasser portionsweise verdünnt, worauf man eine pastenartige, standfeste, milchig-weiße Emulsion erhält. Der Festgehalt der Emulsion beträgt 86,3 %. Die Emulsionspaste ist auch nach 8-monatiger Lagerung bei Raumtemperatur homogen und stabil.

Durch Eindampfen der Emulsion bei 25°C tritt bereits nach 45 Minuten Hautbildung ein, nach 5 Stunden ist nahezu ein kompakter Film entstanden. Nach 24h/25°C wird ein elastischer, auf Glas, Papier oder Aluminium haftender Film erhalten.

Die Messwerte nach DIN 53504-85, Normstab S3A, betragen: Reißdehnung 680 %, Spannungswert bei 100 % Dehnung 0,11 N/mm$^2$. Die Emulsionspaste ist als Fugendichtmasse geeignet.

Beispiel 8

In einem Ultra-Turrax T 50 Emulgiergerät (Fa. Janke & Kunkel) wird aus 4 g Isotridecylpentadecaethoxylat käuflich erwerblich unter dem Handelsnamen Lutensol TO 15 (Fa. BASF), und 8 g Wasser ein Emulgatorgemisch hergestellt, zu dem 100 g eines frisch hergestellten homogenen Siloxan-/Silangemisches aus 97,05 g eines Siliconharzes (29-Si-NMR: 72, 7 Mol% $CH_3SiO_{3/2}$, 1,6 Mol% $(CH_3)_2SiO_{2/2}$ und 25, 7 Mol% $(CH_3)_3SiO_{1/2}$; OH-Gehalt nach Zerewitinow: 5,8 Gew.%; Viskosität 2640 mm$^2$/sec.) und 3,0 g Cyclohexylaminomethyltriethoxysilan dosiert wird. Es wird dann mit insgesamt 89,9 g Wasser portionsweise verdünnt, worauf man milchig-weiße Emulsion erhält. Der Festgehalt der Emulsion beträgt 47,9 %. Die Emulsion ist auch nach 5-monatiger Lagerung bei Raumtemperatur homogen und stabil.

Durch Eindampfen der Emulsion wird innerhalb von 24h/25°C ein wenig elastischer, harter, transparenter, auf Glas, Papier, Aluminium oder Beton hervorragend haftender Film erhalten.

Beispiel 9

Analog Beispiel 1 wird eine Dispersion unter Verwendung folgender Komponenten hergestellt:

5 g Isotridecyldecaethoxylat (Lutensol TO 109, Fa. BASF);
8 g vollentsalztes Wasser;
100,65 g eines Siloxan-/Silangemisches, frisch hergestellt aus 97,5 g Siloxan (1c) (Polydimethylsiloxandiol mit einem Gehalt an terminalen OH-Gruppen von 740 Gew.-ppm), 0,45 g N-Morpholinomethyltriethoxysilan, und zusätzlich als Stoff (5) 2,5 g N-(2-Aminoethyl)(3-aminopropyl)methyldimethoxysilan; 90,1 g vollentsalztes Wasser.

Es entsteht eine milchig-weiße Emulsion. Der Festgehalt der Emulsion beträgt 52,7 %, der pH-Wert 8,5. Die Emulsion ist auch nach 3-monatiger Lagerung bei Raumtemperatur homogen und stabil.
Durch Eindampfen der Emulsion wird innerhalb von 24h/25°C ein elastischer, auf Glas, Papier oder Aluminium gut haftender Film erhalten. Die Siliconabdeckung durch diesen Film ist auf Papier einwandfrei und zeigt gegenüber handelsüblichen Klebeetiketten gute Trenneigenschaften.

Beispiel 10

Analog Beispiel 1 wird eine Dispersion unter Verwendung folgender Komponenten hergestellt:

8,1 g teilhydrophobierte Kieselsäure, hergestellt nach EP 1 433 749 Al, dispergiert in 43,9 g vollentsalztem Wasser,
99,0 g eines Siloxan-/Silangemisches, frisch hergestellt aus 1,0 g Siloxan (1b), 97,56 g Siloxan (1a), 0,44 g N-Morpholinomethyltriethoxysilan,
45,8 g vollentsalztes Wasser.

Es entsteht eine milchig-weiße Emulsion. Der Festgehalt der Emulsion beträgt 52,1 %, der pH-Wert 5,5. Die Emulsion ist auch nach 3-monatiger Lagerung bei Raumtemperatur homogen und stabil.
Durch Eindampfen der Emulsion wird nach einer Trockenzeit von 24h/25°C ein elastischer, auf Glas und Aluminium haftender Film erhalten.

Beispiel 11

Analog Beispiel 1 wird eine Dispersion unter Verwendung folgender Komponenten hergestellt:

8,25 g Isotridecylpentaethoxylat (Lutensol TO 5, Fa. BASF);
10,34 g Isotridecyldecaethoxylat (Lutensol TO 109, Fa. BASF);
16,5 g Tagat S (1:1 in Wasser), (Fa. Goldschmidt AG)
724,0 g eines Siloxan-/Silangemisches, frisch hergestellt aus 720,2 g Siloxan (la), 3,98 g N-Morpholinomethyltriethoxysilan; 596,5 g vollentsalztes Wasser.

Es entsteht eine milchig-weiße Emulsion. Der Festgehalt der Emulsion beträgt 53,8 %, der pH-Wert 6,5. Die Emulsion ist auch nach 6-monatiger Lagerung bei Raumtemperatur homogen und stabil.
Durch Eindampfen der Emulsion wird nach einer Trockenzeit von 24h/25°C ein elastischer, opaker Film erhalten.

Beispiel 12

Emulsion A:

Analog Beispiel 1 wird eine Dispersion unter Verwendung folgender Komponenten hergestellt:

5 g Isotridecyldecaethoxylat (Lutensol TO 109, Fa. BASF);
8 g vollentsalztes Wasser;
100,0 g eines Siloxan-/Silangemisches, frisch hergestellt aus 94 g Trimethylsilyl-endgestoppertes Polydimethylsiloxan mit einer Viskosität von 98 $mm^2$/sec und
6,0 g N-Morpholinomethyltriethoxysilan;
90,0 g vollentsalztes Wasser.

Emulsion B:

Analog Beispiel 1 wird eine Dispersion unter Verwendung folgender Komponenten hergestellt:

5 g Isotridecyldecaethoxylat (Lutensol TO 109, Fa. BASF);
8 g vollentsalztes Wasser;
98,0 g Siloxan (la);
90,0 g vollentsalztes Wasser.

Emulsion A und Emulsion B, die beide milchig-weiß sind, werden im Verhältnis 50:8 Gewichtsteilen gemischt.
Durch Eindampfen des Emulsionsgemisches wird nach einer Trockenzeit von 24h/25°C ein elastischer, gut haftender Film erhalten, dessen Oberfläche sich glatt anfühlt.

Beispiel 13

50 Gewichtsteile Emulsion A aus Beispiel 12 werden mit 8 Gewichtsteilen der Emulsion aus Beispiel 5 gemischt. Durch Eindampfen des Emulsionsgemisches wird nach einer Trockenzeit von 3 Tagen/25°C ein elastisch-klebriger, gut haftender Film erhalten.

Beispiel 14

Zur Herstellung einer Mikroemulsion eines aminhaltigen vernetzten Silicons wird zunächst ein homogenes Emulgatorgemisch aus 1,5 g Diethylenglykolmonobutylether, 3,3 g Lutensol TO 5 (Fa. BASF), 0,3 g Marlipal ST 1618/25 (Fa. Sasol GmbH, Marl) und 0,07 g 80%iger Essigsäure bereitet.
In diese Vormischung wird eine frische Lösung, hergestellt aus 0,055 g N-Morpholinomethyltriethoxysilan, 8,0 g Siloxan (1b) und 2,0 g Siloxan (1a) eingerührt und dann langsam mit 14,5 g entionisiertem Wasser verdünnt. Man erhält eine dünnflüssige transparente Mikroemulsion.
Ca. 2 g der Mikroemulsion werden bei 50°C getrocknet. Nach 1 Stunde ist Hautbildung eingetreten. Nach 5 Stunden Trockenzeit bei 50°C ist ein elastisch-klebriger, gut haftender, opaker Silicon-Film entstanden.

Beispiel 15

Zur Herstellung einer Mikroemulsion eines vernetzten Silicons werden 4 g Emulsion gemäß Beispiel 7 mit 1,5 g 1,2-Propandiol vermischt. Es entsteht eine dünnflüssige, nahezu klare Emulsion von vernetztem Silicon.
Durch Eindampfen der Emulsion wird nach einer Trockenzeit von 72h/20°C ein elastischer, opaker Film mit sich trocken anfühlender Oberfläche erhalten.

Beispiel 16

In 96 Gewichtsteile der Emulsion aus Beispiel 7 werden 4 Gewichtsteile einer pyrogen erzeugten hochdispersen hydrophilen Kieselsäure (BET-Oberfläche: 150 m$^2$/g) eingemischt. Es entsteht ein fließfähiges Pulver. Nach einer Trockenzeit von 4 Stunden/25°C entsteht aus diesem Gemisch ein elastisches Pulver.

Beispiel 17

52 Gewichtsteile der Emulsion aus Beispiel 7 werden mit 34 Gewichtsteile Wasser verdünnt und mit 4,3 Gewichtsteile einer SBR-Dispersion (Typ 85PI6 von Synthomer Ltd., Harlow, GB) als weiterer Komponente (5) vermischt.
Durch Eindampfen dieses Gemisches wird nach einer Trockenzeit von 24h/25°C ein elastischer, gut haftender Film auf Glas erhalten.

Beispiel 18

8 Gewichtsteile der Emulsion aus Beispiel 7 werden mit 1 Gewichtsteil einer 10%igen Lösung von Polyvinylalkohol in Wasser (Hydrolysegrad des PVA: 88 %, Viskosität der 10 %igen Lösung bei 25°C: 950 mm$^2$/sec) als Komponente (5) vermischt.
Durch Eindampfen dieses Gemisches wird nach einer Trockenzeit von 24h/25°C ein elastischer, gut haftender Film auf Glas und Aluminium erhalten.

Beispiel 19

Analog Beispiel 1 wird eine Dispersion unter Verwendung folgender Komponenten hergestellt:

2,5 g Isotridecyldecaethoxylat (Lutensol TO 109, Fa. BASF);
8 g vollentsalztes Wasser;
70,15 g eines Siloxan-/Silangemisches, frisch hergestellt aus 69,92 g Siloxan (1d) (Polydimethylsiloxandiol mit einem Gehalt an terminalen OH-Gruppen von 1900 Gew.-ppm),
0,23 g N-Morpholinomethyltriethoxysilan,
und zusätzlich als Stoff (5) 30 g eines trimethylsilylendgestopperten Polydimethylsiloxan mit einer Viskosität von 102 mm$^2$/sec;
90,0 g vollentsalztes Wasser.

Es entsteht eine milchig-weiße Emulsion. Der Festgehalt der Emulsion beträgt 51,7 %, der pH-Wert 6,5. Die Emulsion ist auch nach 3-monatiger Lagerung bei Raumtemperatur homogen und stabil.
Durch Eindampfen der Emulsion wird nach einer Trockenzeit von 48h/23°C ein elastischer Film erhalten.

Beispiel 20

Beispiel 1 wird sinngemäß wiederholt mit dem Unterschied, dass anstatt der Mischung aus Siloxan (1a) und Silan (2) nun 69,6 g reines Polydimethylsiloxandiol mit einem Gehalt an terminalen OH-Gruppen von 1100 Gew.-ppm (in Beispiel 1 beschrieben) in drei Portionen und danach 30,39 g einer Lösung von 0,39 g N-Morpholinomethyltriethoxysilan in 30,00 g eines trimethylsilylendgestopperten Polydimethylsiliconöls der Viskosität 350 mPa.s (25°C) in zwei Portionen zugegeben werden. Es folgt die identische Verdünnung mit Wasser.
Bei gleichem Silicon- und Festgehalt hat die Emulsion eine Teilchengröße von 294 nm. Die Emulsion zeigt nach 5 Tagen /50°C keine Veränderung.

Beispiel 21

In 100 g einer handelsübliche Emulsion (Finish CT 45 E), enthaltend als Siloxan (1b) ca. 36 Gew.% eines Copolymers aus 3-(2-Aminoethylamino)propyl-methylsiloxy- und Dimethylsiloxyeinheiten mit einer Aminzahl von 0,145, einer Viskosität von 4700 mm$^2$/s (bei 25°C) und einem Endgruppenverhältnis von OH/OMe = 54/46, als Emulgator (4) 5 % Isotridecyldecaethoxylat, 85 %ig in Wasser, käuflich erwerblich unter dem Handelsnamen Lutensol TO 109 (Fa. BASF), ferner 0,2 % Essigsäure (80%ig) und 0,1% eines handelsübliche, wässrigen Konservierungsmittel auf Basis von Isothiazolinonen als weitere Stoffe (5), und der Rest auf 100 % vollentsalztes Wasser als Dispergiermittel (3), werden 0,4 g N-Morpholinomethyl-triethoxysilan eingemischt. Nach 2 Stunden Standzeit werden 6 g des Gemisches in eine Petri-Schale mit 5 cm Durchmesser gegossen. Nach 30 Stunden Stehenlassen bei Raumtemperatur sind 2,3 g eines weißen, elastischen Films entstanden.

Beispiel 22

Kontinuierliche Herstellung des Siloxans (la) und kontinuierliche Herstellung der Dispersion:

Siloxan (la) wird analog Beispiel 3 in EP 626 415 A1 kontinuierlich hergestellt und kontinuierlich zur Emulgierapparatur weitergeleitet. Zu 97,6 Teile des Siloxans (la), Temperatur ca. 20 °C, werden kontinuierlich 1,0 Teil Siloxan (1b), 0,44 Teile N-Morpholinomethyl-triethoxysilan, 2,5 Teile Isotridecyldecaethoxylat (Lutensol TO 109, Fa. BASF), 6 Teile vollentsalztes Wasser und 0,2 Teile Kathon® LXE (Konservierungsmittel) gegeben. Diese Mischung wird direkt und kontinuierlich einem ersten hochscherenden Mischer vom Typ eines Zahnkranzmischers zugeführt und in diesem Mischer eine viskose Phase gebildet. Der Druck und die Temperatur werden nach diesem Mischer gemessen und so eingeregelt, dass eine qualitativ hochwertige und möglichst feinteilige Emulsion entsteht.

Es entsteht eine hochviskose transluzente Dispersions-Paste, die 91,5 % Festgehalt hat. Die Paste kann direkt in Gebinde abgefüllt werden, oder auch mit anderen Stoffen vermischt oder bei Bedarf mit Wasser weiter verdünnt werden.
Zur Prüfung wird die Paste auf Glas zu dünnen Film ausgestrichen. An einem Pastenaufstrich wird sofort getestet, ob sich die konzentrierte, noch nicht angetrocknete Paste mit Wasser entfernen lässt. Ergebnis: Die nicht angetrocknete Paste ist mit Wasser leicht entfernbar.
An einem weiteren Pastenaufstrich wird die Hautbildung getestet. Ergebnis: Nach 20 Minuten tritt Hautbildung ein. Nach 24 Stunden ist ein elastischer, auf Glas haftender Film entstanden. Die Paste kann als Fugendichtmasse eingesetzt werden.

Vergleichsversuch 1 (nicht erfindungsgemäß)

Beispiel 1 wird sinngemäß wiederholt mit dem Unterschied, dass statt des in Beispiel 1 verwendeten Siloxan-Polymer/Silangemisches nun 100 g eines frisch hergestellten homogenen Siloxan-Polymer/Silangemisches, bestehend aus 99,65 g Polydimethylsiloxandiol mit einem Gehalt an terminalen OH-Gruppen von 1100 Gew.-ppm und 0,59 g N(2-Aminoethyl)(3-aminopropyl)trimethoxysilan, dosiert werden. Es folgt die identische Verdünnung mit Wasser, worauf man eine milchig-weiße, homogene Emulsion mit einer durchschnittlichen Teilchengröße von 362 nm und einem pH von 7 erhält.

Durch Eindampfen der Emulsion wird nach auch einer Trockenzeit von 12 Tagen/23°C nur ein Öl erhalten, das in Toluol löslich ist, aber kein Film, der elastomere Eigenschaften aufweist.

Vergleichsversuch 2 (nicht erfindungsgemäß)

In einem Ultra-Turrax Emulgiergerät T 50 (Fa. Janke & Kunkel) wird aus 9,38 g Isotridecyldecaethoxylat (Lutensol TO 109, Fa. BASF AG), 3,90 g Ricinusölethoxylat G 1300 (Fa. Atlas) und 4,55 g Wasser ein steifes Emulgatorgemisch hergestellt, zu dem 125,28 g eines frisch hergestellten homogenen Polymer/Silangemisches aus 124,63 g Polydimethylsiloxandiol mit einem Gehalt an terminalen OH-Gruppen von 765 Gew.-ppm und 0,86 g N-Morpholylmethyl-methyldiethoxysilan dosiert wird. Es wird dann mit insgesamt 106,65 g Wasser portionsweise verdünnt, worauf man eine stabile Emulsion mit einer durchschnittlichen Teilchengröße von 275 nm erhält. Der Silicongehalt der Emulsion beträgt 50 %.

Durch Eindampfen der Emulsion nach einer Standzeit von 24h/25°C und Reextraktion des Siloxanpolymers mit n-Heptan wird nach Verdunsten des Lösemittels ein hochviskoses Polysiloxan mit einer Viskosität von 3400 Pa.s (25°C) erhalten, das in Toluol löslich ist und damit unvernetzt ist. Die Dispersion, die dieses hochviskose Polysiloxan enthält, ist nicht erfindungsgemäß.

**Patentansprüche**

1. Verfahren zur Herstellung von Dispersionen von vernetzten Organopolysiloxanen, indem mindestens ein Si-gebundene Alkoxy- oder Hydroxygruppen aufweisendes Organopolysiloxan (1) mit einem hochreaktiven Trialkoxysilan (2) der allgemeinen Formel

$$(AKT)_a Si(OR^3)_{4-a} \qquad (II)$$

oder dessen Teilhydrolysate, wobei

AKT einen einwertigen, die Reaktivität der Si-$(OR^3)$-Bindung steigernden Rest der Formel -$CR^4_2$-Y bedeutet,
$R^3$ einen Alkylrest mit 1 bis 8 Kohlenstoffatomen je Rest,
$R^4$ ein Wasserstoffatom oder einen Alkylrest mit 1 bis 4 Kohlenstoffatomen, bevorzugt ein Wasserstoffatom bedeutet,
Y einen monofunktionellen Rest aus der Gruppe der Halogene, der monosubstituierten Atome O und S und der substituierten Atome N und P bedeutet,
a 1 ist,

mit der Maßgabe, dass die Ausgangsviskosität der Mischung aus (1) und (2) innerhalb von 2 Stunden Reaktionszeit bei Raumtemperatur (21°C) mindestens verdoppelt wird,
in Gegenwart von Dispersionsmittel (3), vorzugsweise Wasser,
und Emulgator (4)
und gegebenenfalls weiteren Stoffen (5), die an der Umsetzung nicht direkt teilnehmen,
umgesetzt wird,
mit der Maßgabe, dass keine Metall-haltigen Katalysatoren mitverwendet werden, und
dass die Organopolysiloxane in den erhaltenen Dispersionen vernetzt sind und in Toluol unlöslich sind, jedoch eventuell darin quellen, was aber ebenfalls als unlöslich zu verstehen ist.

2. Verfahren nach Anspruch 1, **dadurch gekennzeichnet, dass** als Organopolysiloxan (1) solches aus Einheiten der allgemeinen Formel

$$R_c(OR^1)_d SiO_{\frac{4-(c+d)}{2}} \qquad (I)$$

wobei

R ein Wasserstoffatom oder einen einwertigen, gegebenenfalls mit den Elementen N, P, S, O, Si und Halogen substituierten, gesättigten oder ungesättigten Kohlenwasserstoffrest mit 1 bis 200 Kohlenstoffatomen je Rest bedeutet,

$R^1$ ein Wasserstoffatom oder einen Alkylrest mit 1 bis 8 Kohlenstoffatomen bedeutet,

c 0, 1, 2 oder 3 und

d 0, 1 oder 2 ist,

mit der Maßgabe, dass die Summe c+d $\leq$ 3 ist und im Organopolysiloxan (1) durchschnittlich mindestens ein Rest $OR^1$ je Molekül, bevorzugt in der Bedeutung von $R^1$ gleich Wasserstoffatom, enthalten ist, eingesetzt wird.

3. Verfahren nach Anspruch 1 oder 2, **dadurch gekennzeichnet, dass** als Organopolysiloxane (1) solche der allgemeinen Formel

$(R^1O)R_2SiO(SiR_2O)_e SiR_a(OR^1)$    (IV)

wobei R und $R^1$ die im Anspruch 1 dafür angegebene Bedeutung haben und

e eine ganze Zahl von 1 bis 1000 ist,

mit der Maßgabe, dass 50 bis 100 % aller Reste $R^1$ Wasserstoffatome sind, eingesetzt werden.

4. Verfahren nach einem der Ansprüche 1 bis 3, **dadurch gekennzeichnet, dass** der Rest AKT ein Rest der Formel $-CH_2NHR^5$, $-CH_2NR^5_2$ oder $-CH_2NR^6$ ist, wobei $R^5$ einen einwertigen, gegebenenfalls N- und/oder O-Atome enthaltenden Kohlenwasserstoffrest mit 1 bis 18 Kohlenstoffatomen und $R^6$ einen zweiwertigen gegebenenfalls N- und/oder O-Atome enthaltenden Kohlenwasserstoffrest mit 3 bis 12 Kohlenstoffatomen bedeutet.

5. Verfahren nach einem der Ansprüche 1 bis 4, **dadurch gekennzeichnet, dass** Silan (2) in solchen Mengen eingesetzt wird, dass 0,6 bis 5 Äquivalente $-OR^3$ je Äquivalent $-OR^1$ in Organopolysiloxan (1) vorliegen, wobei $R^1$ ein Wasserstoffatom ist.

6. Verfahren nach einem der Ansprüche 1 bis 5, **dadurch gekennzeichnet, dass** als Dispersionsmittel (3) Wasser eingesetzt wird.

7. Verfahren nach einem der Ansprüche 1 bis 6, **dadurch gekennzeichnet, dass** die zur Herstellung der Dispersion benötigen Organopolysiloxane (1) kontinuierlich hergestellt und kontinuierlich zur Emulgierapparatur weitergeleitet werden, und vor der Emulgierung kontinuierlich mit Silanen (2), Emulgatoren (4) und zumindest einem Teil des Wassers als Dispergiermittel (3) vermischt werden, und diese Mischung direkt und kontinuierlich einem ersten hochscherenden Mischer zugeführt und in diesem Mischer eine viskose Phase gebildet wird, wobei der Druck und die Temperatur nach diesem Mischer gemessen und so eingeregelt werden, dass eine qualitativ hochwertige und möglichst feinteilige Dispersion entsteht.

8. Dispersionen von vernetzten Organopolysiloxanen enthaltend vernetzte Organopolysiloxane aus Einheiten der allgemeinen Formel

$$AKT_n R_c(OR^1)_d SiO_{\frac{4-(n+c+d)}{2}} \qquad (III)$$

wobei AKT, R, $R^1$, c und d die in Anspruch 1 und 2 dafür angegebene Bedeutung haben, und

n 0 oder 1 ist,

mit der Maßgabe, dass die Summe n+c+d $\leq$ 3 ist und dass durchschnittlich je Molekül mindestens ein Rest AKT enthalten ist,

Dispersionsmittel (3), vorzugsweise Wasser, und Emulgatoren (4), sowie ggf. weitere Stoffe (5), die an der Umsetzung nicht direkt teilnehmen,

mit der Maßgabe, dass keine Metallkatalysatoren enthalten sind und dass die Organopolysiloxane in den Dispersionen vernetzt sind und in Toluol unlöslich sind, jedoch eventuell darin quellen, was aber ebenfalls als unlöslich zu verstehen ist.

9.  Dispersionen von vernetzten Organopolysiloxanen nach Anspruch 8, **dadurch gekennzeichnet, dass** als Dispersionsmittel (3) Wasser eingesetzt wird.

10. Dispersionen von vernetzten Organopolysiloxanen nach Anspruch 8 oder 9, **dadurch gekennzeichnet, dass** der Rest AKT ein Rest der Formel -$CH_2NHR^5$, --$CH_2NR^5_2$ oder -$CH_2R^6N$ ist, wobei $R^5$ einen einwertigen, gegebenenfalls N- und/oder O-Atome enthaltenden Kohlenwasserstoffrest mit 1 bis 18 Kohlenstoffatomen und $R^6$ einen zweiwertigen gegebenenfalls N- und/oder O-Atome enthaltenden Kohlenwasserstoffrest mit 3 bis 12 Kohlenstoffatomen bedeutet.

11. Formkörper hergestellt durch Entfernung des Dispersionsmittel (3) von den Dispersionen gemäß einem der Ansprüche 8 bis 10.

12. Formkörper nach Anspruch 11, **dadurch gekennzeichnet, dass** das Dispersionsmittel (3) Wasser ist und dass die Dispersionen bei einer Temperatur von 5 bis 150 °C trocknen gelassen werden.

13. Formkörper nach Anspruch 11 oder 12, **dadurch gekennzeichnet, dass** es sich um harte oder elastomere Formkörper handelt.

14. Formkörper nach Anspruch 11, 12 oder 13, **dadurch gekennzeichnet, dass** es sich um Beschichtungen oder Überzüge handelt.

15. Formkörper nach einem der Ansprüche 11 bis 13, **dadurch gekennzeichnet, dass** es sich um freistehende Filme und Formkörper handelt

16. Formkörper nach einem der Ansprüche 11 bis 13, **dadurch gekennzeichnet, dass** es sich um Pulver handelt.

17. Verfahren zur Herstellung von Beschichtungen, **dadurch gekennzeichnet, dass** die Dispersion gemäß einem der Ansprüche 8 bis 10 auf ein Substrat aufgetragen wird und das Dispersionsmittel (3) entfernt wird.

18. Verfahren zur Imprägnierung oder Infiltration von Substraten, **dadurch gekennzeichnet, dass** die Dispersion gemäß einem der Ansprüche 8 bis 10 auf ein Substrat aufgetragen wird, das Substrat oder deren Oberfläche imprägniert oder infiltriert wird und das Dispersionsmittel (3) entfernt wird.

**Claims**

1.  Process for preparing dispersions of crosslinked organopolysiloxanes by reacting
    at least one organopolysiloxane (1) containing Si-bonded alkoxy or hydroxyl groups
    with a highly reactive trialkoxy silane (2) of the general formula

    $$(AKT)_aSi(OR^3)_{4-a} \quad (II)$$

    or its partial hydrolyzates, where

    AKT is a monovalent radical, raising the reactivity of the Si-($OR^3$) bond, of the formula -$CR^4_2$-Y,
    $R^3$ is an alkyl radical having 1 to 8 carbon atoms per radical,
    $R^4$ is a hydrogen atom or an alkyl radical having 1 to 4 carbon atoms, preferably a hydrogen atom,
    Y is a monofunctional radical from the group consisting of halogens, monosubstituted atoms O and S, and substituted atoms N and P,
    a is 1,

    with the proviso that the initial viscosity of the mixture of (1) and (2) is at least doubled over the course of 2 hours' reaction time at room temperature (21°C),

in the presence of dispersion medium (3), preferably water,
and emulsifier (4)
and, if desired, of further substances (5) which do not participate directly in the reaction,
with the proviso that no metal-containing catalysts are used, and
that the organopolysiloxanes in the dispersions obtained are crosslinked and are insoluble in toluene, but possibly swell therein - although this is likewise considered to represent insolubility.

2. Process according to Claim 1, **characterized in that** the organopolysiloxane (1) used is those composed of units of the general formula

$$R_c(OR^1)_d SiO_{\frac{4-(c+d)}{2}} \qquad (I)$$

where

R is a hydrogen atom or a monovalent, saturated or unsaturated hydrocarbon radical which is unsubstituted or substituted by the elements N, P, S, O, Si, and halogen, and which has 1 to 200 carbon atoms per radical,
$R^1$ is a hydrogen atom or an alkyl radical having 1 to 8 carbon atoms,
c is 0, 1, 2 or 3, and
d is 0, 1 or 2,

with the proviso that the sum c+d is $\leq$ 3 and in the organopolysiloxane (1) there is on average at least one radical $OR^1$ per molecule, preferably in the definition of $R^1$ as hydrogen atom.

3. Process according to Claim 1 or 2, **characterized in that** organopolysiloxanes (1) used are of the general formula

$(R^1O) R_2SiO (SiR_2o)_e SiR_2(OR^1)$ (IV)

where R and $R^1$ are as defined in Claim 1, and
e is an integer from 1 to 1000,
with the proviso that 50% to 100% of all radicals $R^1$ are hydrogen atoms.

4. Process according to any one of Claims 1 to 3, **characterized in that** the radical AKT is a radical of the formula $-CH_2NHR^5$, $-CH_2NR^5_2$ or $-CH_2R^6N$, in which $R^5$ is a monovalent hydrocarbon radical having 1 to 18 carbon atoms, with or without N and/or O atoms, and $R^6$ is a divalent hydrocarbon radical having 3 to 12 carbon atoms, with or without N and/or O atoms.

5. Process according to any one of Claims 1 to 4, **characterized in that** silane (2) is used in amounts such that there are 0.6 to 5 equivalents of $-OR^3$ per equivalent of $-OR^1$ in organopolysiloxane (1), $R^1$ being a hydrogen atom.

6. Process according to any one of Claims 1 to 5, **characterized in that** water is used as dispersion medium (3).

7. Process according to any one of Claims 1 to 6, **characterized in that** the organopolysiloxanes (1) needed for preparing the dispersion are prepared continuously and passed on continuously to the emulsifying apparatus, and prior to emulsification are mixed continuously with silanes (2), emulsifiers (4), and at least part of the water, as dispersion medium (3), and this mixture is supplied directly and continuously to a first high-shear mixer in which a viscous phase is formed, the pressure and the temperature being measured after this mixer and being regulated so as to form a high-quality, very finely divided dispersion.

8. Dispersions of crosslinked organopolysiloxanes comprising crosslinked organopolysiloxanes composed of units of the general formula

$$AKT_n R_c (OR^1)_d SiO_{\frac{4-(n+c+d)}{2}} \qquad (III)$$

where AKT, R, $R^1$, c, and d are as defined in Claims 1 and 2, and

n is 0 or 1,

with the proviso that the sum n+c+d ist $\leq 3$, and that on average there is at least one radical AKT per molecule,

dispersion media (3), preferably water, and emulsifiers (4), and also, if desired, further substances (5), which do not participate directly in the reaction,

with the proviso that there are no metal catalysts present and that the organopolysiloxanes are crosslinked in the dispersions and are insoluble in toluene, but possibly swell therein - although this is likewise considered to represent insolubility.

9. Dispersions of crosslinked organopolysiloxanes according to Claim 8, **characterized in that** water is used as dispersion medium (3).

10. Dispersions of crosslinked organopolysiloxanes according to Claim 8 or 9, **characterized in that** the radical AKT is a radical of the formula 5-$CH_2NHR^5$, -$CH_2NR^5_2$ or -$CH_2R^6N$, in which $R^5$ is a monovalent hydrocarbon radical having 1 to 18 carbon atoms, with or without N and/or O atoms, and $R^6$ is a divalent hydrocarbon radical having 3 to 12 carbon atoms, with or without N and/or O atoms.

11. Shaped bodies produced by removing the dispersion medium (3) from the dispersions according to any one of Claims 8 to 10.

12. Shaped bodies according to Claim 11, **characterized in that** the dispersion medium (3) is water and **in that** the dispersions are dried at a temperature of 5 to 150°C.

13. Shaped bodies according to Claim 11 or 12, **characterized in that** they are hard or elastomeric shaped bodies.

14. Shaped bodies according to Claim 11, 12 or 13, **characterized in that** they are coatings or overlays.

15. Shaped bodies according to any one of Claims 11 to 13, **characterized in that** they are self-supporting films and shaped bodies.

16. Shaped bodies according to any one of Claims 11 to 13, **characterized in that** they are powders.

17. Method of producing coatings, **characterized in that** the dispersion according to any one of Claims 8 to 10 is applied to a substrate and the dispersion medium (3) is removed.

18. Method of impregnating or infiltrating substrates, **characterized in that** the dispersion according to any one of Claims 8 to 10 is applied to a substrate, the substrate or its surface is impregnated or infiltrated, and the dispersion medium (3) is removed.

**Revendications**

1. Procédé pour la préparation de dispersions d'organopolysiloxanes réticulés, en ce qu'on transforme au moins un organopolysiloxane (1) présentant des groupes alcoxy ou hydroxy liés par Si avec un trialcoxysilane (2) hautement réactif de formule générale

$(AKT)_aSi(OR^3)_{4-a}$    (II)

ou ses hydrolysats partiels,

AKT signifiant un radical monovalent, augmentant la réactivité de la liaison Si- ($OR^3$) de formule -$CR^4_2$-Y,

$R^3$ signifiant un radical alkyle comprenant 1 à 8 atomes de carbone par radical,

$R^4$ signifiant un atome d'hydrogène ou un radical alkyle comprenant 1 à 4 atomes de carbone, de préférence un atome d'hydrogène,

Y signifiant un radical monofonctionnel du groupe des halogènes, des atomes O et S monosubstitués et des atomes N et P substitués,

a valant 1,

étant entendu

que la viscosité de départ du mélange de (1) et (2) est au moins doublée en 2 heures de temps de réaction à température ambiante (21°C), en présence de dispersants (3), de préférence de l'eau, et d'émulsifiant (4) et le cas échéant d'autres substances (5), qui ne participent pas directement à la transformation, étant entendu que des catalyseurs contenant un métal ne sont pas utilisés conjointement, et

que les organopolysiloxanes sont réticulés dans les dispersions obtenues et insolubles dans le toluène, mais y gonflent éventuellement, ce qui est cependant également à considérer comme insoluble.

**2.** Procédé selon la revendication 1, **caractérisé en ce qu'**on utilise comme organopolysiloxane (1) ceux d'unités de formule générale

$$R_c(OR^1)_d SiO_{\frac{4-(c+d)}{2}} \qquad (I)$$

où

R signifie un atome d'hydrogène ou un radical hydrocarboné monovalent, le cas échéant substitué par les éléments N, P, S, O, Si et halogène, saturé ou insaturé, comprenant 1 à 200 atomes de carbone par radical,
$R^1$ signifie un atome d'hydrogène ou un radical alkyle comprenant 1 à 8 atomes de carbone,
c vaut 0, 1, 2 ou 3 et
d vaut 0, 1 ou 2,

étant entendu que la somme c + d $\leq$ 3 et que l'organopolysiloxane (1) contient en moyenne au moins un radical $OR^1$ par molécule, $R^1$ présentant de préférence la signification d'un atome d'hydrogène.

**3.** Procédé selon la revendication 1 ou 2, **caractérisé en ce qu'**on utilise comme organopolysiloxanes (1) ceux de formule générale

$$(R^1O)R_2SiO(SiR_2O)_eSiR_2(OR^1) \qquad (IV)$$

où
R et $R^1$ ont la signification mentionnée pour ces radicaux dans la revendication 1 et
e est un nombre entier de 1 à 1000,
étant entendu que 50 à 100% de tous les radicaux $R^1$ sont des atomes d'hydrogène.

**4.** Procédé selon l'une quelconque des revendications 1 à 3, **caractérisé en ce que** le radical AKT représente un radical de formule -$CH_2NHR^5$, -$CH_2NR^5_2$ ou -$CH_2R^6N$ où $R^5$ signifie un radical hydrocarboné monovalent, contenant le cas échéant des atomes N et/ou O, comprenant 1 à 18 atomes de carbone et $R^6$ signifie un radical hydrocarboné divalent, contenant le cas échéant des atomes de N et/ou O, comprenant 3 à 12 atomes de carbone.

**5.** Procédé selon l'une quelconque des revendications 1 à 4, **caractérisé en ce qu'**on utilise un silane (2) en des quantités telles qu'il existe 0,6 à 5 équivalents -$OR^3$ par équivalent -$OR^1$ dans l'organopolysiloxane (1), $R^1$ représentant un atome d'hydrogène.

**6.** Procédé selon l'une quelconque des revendications 1 à 5, **caractérisé en ce qu'**on utilise de l'eau comme dispersant (3).

**7.** Procédé selon l'une quelconque des revendications 1 à 6, **caractérisé en ce que** les organopolysiloxanes (1) nécessaires pour la préparation de la dispersion sont préparés en continu et introduits en continu dans l'appareil d'émulsion, et sont mélangés avant l'émulsion en continu avec des silanes (2), des émulsifiants (4) et au moins une partie de l'eau comme dispersant (3) et ce mélange est introduit directement et en continu dans un premier mélangeur à cisaillement élevé et une phase visqueuse est formée dans ce mélangeur, la pression et la température étant mesurées et réglées, en aval de ce mélangeur, de manière telle qu'il se forme une dispersion de qualité élevée et la plus fine possible.

**8.** Dispersions d'organopolysiloxanes réticulés contenant des organopolysiloxanes réticulés constitués d'unités de formule générale

$$AKT_n R_c (OR^1)_d SiO_{\frac{4-(n+c+d)}{2}} \qquad (III)$$

où

AKT, R, R$^1$, c et d ont la signification indiquée pour ceux-ci dans les revendications 1 et 2 et

n vaut 0 ou 1,

étant entendu que la somme n+c+d ≤ 3 et que chaque molécule contient en moyenne au moins un radical AKT, des dispersants (3), de préférence de l'eau, et des émulsifiants (4) et le cas échéant d'autres substances (5), qui ne participent pas directement à la transformation, étant entendu que des catalyseurs métalliques ne sont pas contenus et que les organopolysiloxanes sont réticulés dans les dispersions et insolubles dans le toluène, mais y gonflent éventuellement, ce qui est cependant également à considérer comme insoluble.

9. Dispersions d'organopolysiloxanes réticulés selon la revendication 8, **caractérisées en ce qu'**on utilise de l'eau comme dispersant (3).

10. Dispersions d'organopolysiloxanes réticulés selon la revendication 8 ou 9, **caractérisées en ce que** le radical AKT signifie un radical de formule -CH$_2$NHR$^5$, -CH$_2$NR$^5_2$ ou -CH$_2$R$^6$N, où R$^5$ signifie un radical hydrocarboné monovalent, contenant le cas échéant des atomes de N et/ou O, comprenant 1 à 18 atomes de carbone et R$^6$ signifie un radical hydrocarboné divalent, contenant le cas échéant des atomes de N et/ou O, comprenant 3 à 12 atomes de carbone.

11. Corps façonnés préparés par élimination du dispersant (3) des dispersions selon l'une quelconque des revendications 8 à 10.

12. Corps façonnés selon la revendication 11, **caractérisés en ce que** le dispersant (3) est de l'eau et **en ce qu'**on laisse sécher les dispersions à une température de 5 à 150°C.

13. Corps façonnés selon la revendication 11 ou 12, **caractérisés en ce qu'**il s'agit de corps façonnés durs ou élastomères.

14. Corps façonnés selon la revendication 11, 12 ou 13, **caractérisés en ce qu'**il s'agit de revêtements ou de recouvrements.

15. Corps façonnés selon l'une quelconque des revendications 11 à 13, **caractérisés en ce qu'**il s'agit de films autonomes et de corps façonnés autonomes.

16. Corps façonnés selon l'une quelconque des revendications 11 à 13, **caractérisés en ce qu'**il s'agit de poudres.

17. Procédé pour la préparation de revêtements, **caractérisé en ce que** la dispersion selon l'une quelconque des revendications 8 à 10 est appliquée sur un substrat et le dispersant (3) est éliminé.

18. Procédé pour l'imprégnation ou l'infiltration de substrats, **caractérisé en ce que** la dispersion selon l'une quelconque des revendications 8 à 10 est appliquée sur un substrat, le substrat ou sa surface est imprégné(e) ou infiltré(e) et le dispersant (3) est éliminé.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5942574 A
- US 5001187 A
- US 20010027233 A1
- US 4894412 A
- EP 0874017 B1
- DE 2912431 A1
- WO 2004069899 A
- US 5861459 A
- EP 828794 B1
- EP 655475 B1
- DE 2500020 A
- DE 1244181 A
- US 5004771 A
- US 5994459 A
- WO 2006015740 A1
- EP 1017745 A
- DE 19742759 A
- EP 1433749 A1
- EP 626415 A1

**In der Beschreibung aufgeführte Nicht-Patentliteratur**

- **A. ADIMA.** *Eur. J. Org. Chem.,* 2004, 2582-2588
- Ullmann's Encyclopedia of Industrial Chemistry. Wiley-VCH Verlag, 2003